# EUROPÄISCHE PATENTSCHRIFT

(11) **EP 3 106 691 B1**
(45) Veröffentlichungstag und Bekanntmachung des Hinweises auf die Patenterteilung: **04.03.2020**
(21) Anmeldenummer: 15172544.7
(22) Anmeldetag: 17.06.2015
(51) Int. Cl.: F16C 33/10, F16C 35/063, F16C 35/077, F16C 27/06, F16C 25/08, F16C 33/66, F16N 7/12

(54) **LAGERFASSUNG, VERTEILUNGSELEMENT UND VAKUUMPUME**
BEARING SOCKET, DISTRIBUTION ELEMENT AND VACUUM PUMP
PALIER, ÉLÉMENT DE RÉPARTITION ET POMPE À VIDE

(43) Veröffentlichungstag der Anmeldung: 21.12.2016
(73) Patentinhaber: PFEIFFER VACUUM GMBH, 35614 Asslar (DE)
(72) Erfinder: Leib, Uwe, 35781 Weilburg (DE); Schill, Michael, 35614 Asslar-Bechlingen (DE); Koch, Bernhard, 35799 Barig-Selbenhausen (DE)
(74) Vertreter: Manitz Finsterwald Patent- und Rechtsanwaltspartnerschaft mbB

(56) Entgegenhaltungen:
- DE-A1-102006 053 237
- GB-A- 600 592
- US-A- 2 272 554

## Beschreibung

Die vorliegende Erfindung betrifft eine Lagerfassung für eine Vakuumpumpe, insbesondere eine Turbomolekularpumpe, die ein mit Schmiermittel versorgtes Wälzlager zur Lagerung einer Welle, einen Aufnahmeraum für das Wälzlager, ein, insbesondere separates Abschlusselement, mittels dem die axiale Lage des Wälzlagers in dem Aufnahmeraum in axialer Richtung begrenzt ist, und zumindest ein Schmiermittel förderndes oder leitendes Element, mit dem das Schmiermittel in den Aufnahmeraum verteilbar ist, umfasst. Ferner betrifft die Erfindung ein Verteilungselement sowie eine Vakuumpumpe.

Am vorvakuumseitigen Ende einer Turbomolekularpumpe werden oft Wälzlager zum Lagern eines Endes einer Rotorwelle vorgesehen. Eine solche Turbomolekularpumpe ist zum Beispiel in der DE 10 2006 083 237 A1 beschrieben. Hierbei wird das Wälzlager mit Schmiermittel (z.B. Öl) versorgt, sodass das Wälzlager im Betrieb kontinuierlich und zuverlässig geschmiert werden kann. Um die Ölversorgung bereitzustellen, wird unter anderem eine sogenannte Filzschmierung verwendet. Dabei wird das in einem Filzmaterial gespeicherte Öl über einen mit der Rotorwelle drehenden Konus von dem Filz in Richtung des Kugellagers gefördert.

Je nach Einbaulage der Turbomolekularpumpe sind zwei Speicherfilze erforderlich, damit das Öl auf beiden Seiten des Kugellagers wieder aufgenommen werden kann. Um die zwei typischerweise über und unter dem Wälzlager liegenden Filzlagen miteinander zu verbinden und um einen Ölaustausch zwischen diesen Lagen zu ermöglichen, werden Verteilungselemente eingesetzt, die das Öl per Kapillarwirkung von der mehr gesättigten Filzlage zu der weniger gesättigten Filzlage transportieren. So werden ein beständiger Ölausgleich und damit eine zuverlässige beidseitige Schmierung des Wälzlagers sichergestellt. Die Verteilungselemente können beispielsweise Stäbchen aus Poroplastmaterial sein. Häufig sind sie in Bohrungen, die in einer Lagerfassung bzw. in einem Grundkörper der Turbomolekularpumpe vorgesehen sind, angeordnet.

Im Servicefall einer Turbomolekularpumpe wird oftmals der Bereich, in dem das Filzmaterial und das Wälzlager angeordnet sind, geöffnet, z.B. um kleinere Metallspäne aus dem Bereich des Wälzlagers zu entfernen oder um das Schmiermittel auszutauschen oder das Filzmaterial zu reinigen bzw. auszutauschen. Bei bestimmten Einbaulagen der Pumpe können dabei die Verteilungselemente herausfallen. Das erneute Einsetzen der Verteilungselemente sowie des Ölspeicherfilzmaterials gestaltet sich häufig kompliziert und ist daher lästig. Dies hat zur Folge, dass die Turbomolekularpumpe in der Regel als Ganzes abmontiert wird, um ihre Lage so zu verändern, dass ein Service problemlos stattfinden kann. Dies erzeugt einen zusätzlichen Aufwand und Kosten beim Service der Turbomolekularpumpe.

Die US2,272,554 und die GB600,592 beschreiben jeweils Anordnungen, die sich mit dem Schmieren von Lagern mittels Öl befassen.

Es ist eine Aufgabe der vorliegenden Erfindung, eine Anordnung für das Wälzlager zu schaffen, welche einen zumindest gleichwertigen Betrieb der Vakuumpumpe ermöglicht, die Ausfallzeit bei Wartungen reduziert und dadurch die Betriebskosten der Pumpe senkt. Eine weitere Aufgabe der vorliegenden Erfindung liegt darin, die Reparatur und Wartung der Vakuumpumpe zu vereinfachen.

Diese Aufgabe wird durch eine Lagerfassung mit den Merkmalen des Anspruchs 1 gelöst.

Erfindungsgemäß ist eine Lagerfassung für eine Vakuumpumpe, insbesondere eine Turbomolekularpumpe, vorgesehen, die ein mit Schmiermittel versorgtes Wälzlager zur Lagerung einer Welle, insbesondere Rotorwelle, einen Aufnahmeraum für das Wälzlager, ein - insbesondere separates - Abschlusselement, mittels dem die axiale Lage des Wälzlagers in dem Aufnahmeraum in axialer Richtung begrenzt ist, und zumindest ein ein Schmiermittel förderndes oder leitendes Verteilungselement mit dem das Schmiermittel in dem Aufnahmeraum verteilbar ist, umfasst, wobei das Verteilungselement in seiner Einbaulage mit Kraft beaufschlagt und/oder vorgespannt und mittels Reibschluss in seiner Einbaulage fixiert ist.

Durch das Verspannen des Verteilungselements in der Lagerfassung bzw. im Aufnahmeraum wird dieses in seiner Einbaulage fixiert. Somit wird durch das Beaufschlagen des Verteilungselements mit einer Kraft und/oder des Vorspannens dieses Elements ein Herausfallen des Verteilungselements im Servicefall vermieden. Dies hat zur Folge, dass eine Turbomolekularpumpe mit erfindungsgemäßer Lagerfassung auch in ihrer Einbaulage auf einfache Weise gewartet werden kann. Die Vakuumpumpe folglich auch direkt am Einsatzort gewartet werden, so dass eine Ausfallzeit einer mittels der erfindungsgemäßen Vakuumpumpe betriebenen Anlage verkürzt wird.

Das Verteilungselement - bevorzugt sind mehrere Elemente, beispielsweise 2 bis 12 Elemente, vorgesehen, die z.B. ein Poroplastmaterial umfassen - kann durch das Vorsehen einer Lagerfassung gemäß der vorliegenden Erfindung durch den Benutzer gezielt herausgezogen oder eingesetzt werden.

Vorzugsweise wirkt die Kraft in radialer Richtung, insbesondere nach radial außen und/oder in Bezug auf die Welle in Umfangsrichtung.

Die auf das Verteilungselement wirkende Kraft wird dazu verwendet, um das Verteilungselement in der Lagerfassung einzuklemmen und ein Herausfallen zuverlässig zu verhindern. Eine radial wirkende Kraft verspannt die Verteilungselemente radial nach innen oder nach außen, wohingegen eine in Umfangsrichtung wirkende Kraft im Wesentlichen tangential in Bezug auf die Welle, d.h. in Umfangsrichtung, gerichtet ist.

Durch eine gezielte Anordnung einer die Kraft erzeugenden oder abstützenden Komponente, z.B. des Abschlusselements und/oder der Lagerfassung, können die Verteilungselemente zumindest an einer Stelle in eine Richtung gedrückt werden, um eine die Verteilungselemente fixierende Wirkung zu erzielen.

Die zumindest eine Einrichtung ist zur Lagefixierung des Verteilungselements in seiner Einbaulage vorgesehen. Das Vorsehen einer Einrichtung zur Lagefixierung ermöglicht das Vorspannen des Verteilungselements oder das Aufbringen einer auf das Verteilungselement wirkenden Kraft, so dass es in seiner Einbaulage in der Lagerfassung gehalten wird und nicht unbeabsichtigt herausfallen kann.

Die Einrichtung umfasst zumindest ein Sicherungselement, z.B. eine Feder oder ein elastisches Element (z.B. einen O-Ring), das beim Einsetzen des Verteilungselements vorgespannt wird und es in seiner Einbaulage hält.

Insbesondere ist die zumindest eine Einrichtung am oder im Abschlusselement vorgesehen. Eine mit dem Abschlusselement kooperierende Einrichtung der vorstehend beschriebenen Art ermöglicht es, ein vorvakuumseitiges Ende einer Turbomolekularpumpe kompakter zu gestalten. Je kleiner eine Vakuumpumpe bei gleicher Leistung ausgestaltet werden kann, desto flexibler kann die Pumpe eingesetzt werden.

Alternativ oder zusätzlich kann die Einrichtung auch an jedem Verteilungselement ein Element umfassen, z.B. einen O-Ring, das beim Einsetzen des Verteilungselements in die dafür vorgesehene Bohrung für die Vorspannung sorgt, um das Verteilungselement sicher dort zu halten.
Grundsätzlich ist es also möglich, dass für alle Verteilungselemente eine gemeinsame Einrichtung bzw. ein gemeinsames Sicherungselement vorgesehen ist. Alternativ oder zusätzlich kann/können auch ein oder mehrere Einrichtung(en) oder Sicherungselement(e) für ein oder mehrere der Verteilungselemente vorgesehen sein. Denkbar ist auch, dass die Einrichtung bzw. das Sicherungselement an dem zumindest einen Verteilungselement angeordnet ist. Bevorzugt ist in diesem Fall jedes Verteilungselement mit einer eigenen Einrichtung bzw. mit einem eigenen Sicherungselement versehen.

Einen O-Ring als Sicherungselement vorzusehen, lässt sich kostengünstig und einfach umsetzen. Zum Beispiel kann er in eine Nut an einer geeigneten Komponente der Turbomolekularpumpe eingesetzt werden. Ein O-Ring kann in einem Gehäuseabschnitt der Vakuumpumpe vorgesehen sein und die Verteilungselemente radial nach innen drücken. Beim Vorsehen des Sicherungselements an dem Abschlusselement kann dieses derart angeordnet sein, dass die Verteilungselemente radial nach außen gedrückt werden.

Insbesondere ist die Einrichtung auf der dem Wälzlager gegenüberliegenden Seite des Abschlusselements angeordnet. Das Abschlusselement ist - wie bereits erläutert - zur Begrenzung der axialen Lage des Wälzlagers vorgesehen. Bei Anordnung der Einrichtung auf der dem Wälzlager gegenüberliegenden Seite des Abschlusselements können bei einer Wartung der Turbomolekularpumpe die Rotorwelle und das Wälzlager weiterhin in ihrer Einbaulage gehalten werden, sodass keine erneute Einstellung der axialen Vorspannung des Wälzlagers in dem Aufnahmeraum von Nöten ist.

In dem Abschlusselement und der Lagerfassung sind jeweils Öffnungen vorgesehen, die miteinander fluchten, um durch diese das Wälzlager mit dem Schmiermittel zu versorgen und/oder Fixierungsmittel zur Fixierung des Abschlusselements an der Lagerfassung zu führen. Die Öffnungen haben somit sowohl die Funktion der Versorgung des Wälzlagers mit Schmiermittel als auch die Funktion der Befestigung des Wälzlagers in dem Aufnahmeraum mittels des Abschlusselements.

Vorzugsweise ist das Abschlusselement mittels Schrauben an der Lagerfassung fixiert. Schrauben sind geeignete, kostengünstige Fixierungsmittel, um verschiedene Komponenten einer Vakuumpumpe miteinander zu verbinden. Die Schrauben verbinden das Abschlusselement insbesondere in axialer Richtung, d.h. parallel zur Welle, mit der Lagerfassung.

Vorzugsweise sind die das Schmiermittel fördernden Elemente durch die vorstehend beschriebenen Öffnungen in dem Abschlusselement und der Lagerfassung hindurch geführt.

Es ist auch möglich, dass die Öffnungen in dem als Druckring ausgebildeten Abschlusselement leicht gegenüber den Öffnungen in der Lagerfassung verdreht sind. Durch das relative Verdrehen der Öffnungen, die im Abschlusselement vorgesehen sind, gegenüber den Öffnungen in der Lagerfassung kann ein Verteilungselement zwischen diesen Öffnungen eingespannt oder geklemmt werden, um ein Herausfallen zu verhindern. Hierbei wird eine in Umfangsrichtung der Pumpe wirkende Klemmkraft auf die Verteilungselemente ausgeübt.

Vorzugsweise ist das Abschlusselement zur Lagefixierung des zumindest einen Verteilungselements und zum Einspannen des Wälzlagers in dem Aufnahmeraum direkt oder indirekt benachbart zu dem Wälzlager angeordnet. Insbesondere liegt das Abschlusselement an einem Außenring des Wälzlagers an.

Gemäß einer Ausführungsform ist an zumindest einem, insbesondere an beiden axialen Enden des Verteilungselements zumindest eine Schmiermittel leitende Zufuhrkomponente, insbesondere aus einem Filzmaterial, vorgesehen, wobei die Zufuhrkomponente das Verteilungselement und das Wälzlager derart miteinander verbindet, so dass eine Fluidverbindung zwischen dem Verteilungselement und dem Wälzlager entsteht. Mittels der Zufuhrkomponente kann das Schmiermittel des Wälzlagers in dem Aufnahmeraum gleichmäßig verteilt werden. Die Zufuhrkomponente kann auch eine Schmiermittelspeicherfunktion ausüben.

Gemäß einer Ausführungsform ist die Lagerfassung integral in einem einen vorvakuumseitigen Teil eines Gehäuses der Pumpe bildenden Grundkörper ausgebildet. Der Aufnahmeraum für das Wälzlager wird beispielsweise aus einem Vollmaterial gefräst. In diesen Raum werden das separate Abschlusselement, das Wälzlager sowie das oder die Verteilungselement(e) eingebracht. Diese Bauweise findet sich typischerweise bei kleineren Vakuumpumpen.

Gemäß einer weiteren Ausführungsform ist die Lagerfassung als separater Einsatz in einem einen vorvakuumseitigen Teil eines Gehäuses der Pumpe bildenden Grundkörper angeordnet. Diese Bauweise ist typischerweise bei größeren Vakuumpumpen der Fall.

Es besteht ferner die Möglichkeit, dass das Verteilungselement eine gekrümmte Form aufweist und/oder elastisch ist. Hierbei wird das Verteilungselement selbst beim Einbau durch seine Materialeigenschaften bzw. Formgebung in der Lagerfassung verspannt. Beispielsweise wird das Element beim Einbringen elastisch verformt oder komprimiert. Diese Ausgestaltung ermöglicht das Fixieren des oder der Verteilungselemente in der Vakuumpumpe ohne zusätzliche Bauteile und ohne die Notwendigkeit, die Konstruktion herkömmlicher Vakuumpumpen ändern zu müssen. Somit können auch bestehende Vakuumpumpen mit gekrümmten und/oder elastischen Verteilungselementen nachgerüstet werden, um deren zukünftige Wartung zu vereinfachen.

Ein Verteilungselement für die Lagerfassung kann entweder eine gekrümmte Form aufweisen und ist dadurch zum Verspannen in der Lagerfassung ausgebildet. Alternativ oder zusätzlich kann das elastisch ausgebildet sein, um es durch eine Deformation in der Lagerfassung zu verspannen.

Gemäß einem weiteren Aspekt betrifft die vorliegende Erfindung eine Lagerfassung für eine Vakuumpumpe, insbesondere eine Turbomolekularpumpe, die ein mit Schmiermittel versorgtes Wälzlager zur Lagerung einer Welle, einen Aufnahmeraum für das Wälzlager, ein - insbesondere separates - Abschlusselement, mittels dem die axiale Lage des Wälzlagers in dem Aufnahmeraum in axialer Richtung begrenzt ist, und mehrere Schmiermittel fördernde oder leitende Verteilungselemente, mit denen das Schmiermittel in dem Aufnahmeraum verteilbar ist, umfasst, wobei die Verteilungselemente in ihrer Einbaulage mit Kraft beaufschlagt und/oder vorgespannt sind und mittels Reibschluss in ihrer Einbaulage fixiert sind. Die zumindest eine Einrichtung ist zur Lagefixierung der Verteilungselemente in ihrer Einbaulage vorgesehen ist, um die Verteilungselemente in ihrer Einbaulage in der Lagerfassung zur Lagefixierung zu verspannen. Die Einrichtung umfasst an jedem Verteilungselement einen O-Ring, der beim Einsetzen des jeweiligen Verteilungselements für die Vorspannung sorgt, um das Verteilungselement sicher dort zu halten.

Gemäß einem weiteren Aspekt betrifft die vorliegende Erfindung eine Vakuumpumpe, insbesondere Turbomolekularpumpe, mit einer erfindungsgemäßen Lagerfassung.

Weitere Ausführungsformen der erfindungsgemäßen Lagerfassung bzw. der erfindungsgemäßen Vakuumpumpe, sowie des erfindungsgemäßen Verteilungselements sind in den Ansprüchen, der Beschreibung und den beigefügten Zeichnungen angegeben.

Die Erfindung wird nachstehend auch hinsichtlich weiterer Vorteile und Merkmale unter Bezugnahme auf die beigefügten Zeichnungen anhand von Ausführungsbeispielen erläutert. Es zeigen:
- Fig. 1: eine Vakuumpumpe in einem Querschnitt,
- Fig. 2: einen Querschnitt durch ein vorvakuumseitiges Ende einer erfindungsgemäßen Vakuumpumpe,
- Fig. 3: einen weiterer Querschnitt durch die Vakuumpumpe gemäß Fig. 2 und
- Fig. 4: ein exemplarisches Verteilungselement.

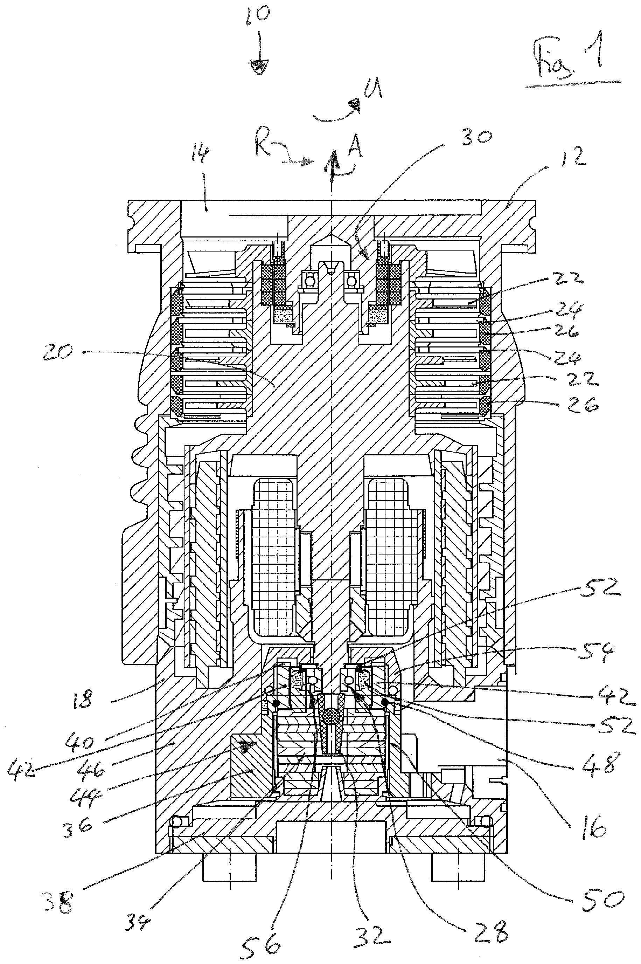

Die in Fig. 1 gezeigte Vakuumpumpe 10 umfasst einen von einem Einlassflansch 12 umgebenden Pumpeneinlass 14 und einen Pumpenauslass, sowie mehrere Prozessgaspumpstufen zur Förderung des an dem Pumpeneinlass anstehenden Prozessgases zu dem Pumpenauslass. Mit dem Bezugszeichen 16 ist ein Bauraum für elektrische Anschlüsse bezeichnet. Die Vakuumpumpe 10 umfasst ein Gehäuse 18 und einen in dem Gehäuse 18 angeordneten Rotor mit einer um die Rotationsachse drehbar gelagerten Rotorwelle 20.

Die gezeigte Vakuumpumpe 10 ist als Turbomolekularpumpe ausgebildet und umfasst mehrere pumpwirksam miteinander in Serie geschaltete Turbomolekularpumpstufen mit mehreren an der Rotorwelle 20 befestigten radialen Rotorscheiben 22 und zwischen den Rotorscheiben 22 angeordneten und in dem Gehäuse 18 festgelegten Statorscheiben 24, wobei eine Rotorscheibe 22 und eine benachbarte Statorscheibe 24 jeweils eine turbomolekulare Pumpstufe bilden. Die Statorscheiben 24 sind durch Abstandsringe 26 in einem gewünschten axialen Abstand zueinander gehalten. Zur drehbaren Lagerung der Rotorwelle 20 sind ein Wälzlager 28 im Bereich des Pumpenauslasses und ein Permanentmagnetlager 30 im Bereich des Pumpeneinlasses 14 vorgesehen. Im Bereich des Wälzlagers 28 ist an der Rotorwelle 20 eine konische Spritzmutter 32 mit einem zu dem Wälzlager 28 hin zunehmenden Außendurchmesser vorgesehen. Die Spritzmutter 32 steht mit zumindest einem Abstreifer eines Betriebsmittelspeichers in gleitendem Kontakt. Der Betriebsmittelspeicher umfasst mehrere aufeinander gestapelte saugfähige Scheiben 34 aus einem Filzmaterial (Speicher- und/oder Zufuhrkomponenten), die mit einem Betriebsmittel für das Wälzlager 28, zum Beispiel mit einem Schmiermittel, insbesondere mit Öl, getränkt sind.

Bei Betrieb der Vakuumpumpe 10 wird das Betriebsmittel durch kapillare Wirkung von dem Betriebsmittelspeicher über den Abstreifer auf die rotierende Spritzmutter 32 übertragen und infolge der Zentrifugalkraft entlang der Spritzmutter 32 in Richtung des größer werdenden Außendurchmessers der Spritzmutter 32 zum Wälzlager 28 hin gefördert. Das Wälzlager 28 und der Betriebsmittelspeicher sind durch einen wannenförmigen Einsatz 36 und ein Deckelelement 38 der Vakuumpumpe 10 eingefasst.

Um die Schmierung des Wälzlagers 28 zu gewährleisten, sind auch am oberen Ende des Wälzlagers 28 saugfähige Scheiben 40 angeordnet. Diese sind mittels Verteilungselemente 42, z.B. Poroplast-Stäbe, mit den untenliegenden, aufeinander gestapelten saugfähigen Scheiben 34 verbunden. Die Verteilungselemente 42 gewährleisten mittels Kapillarwirkung einen Austausch des Schmiermittels zwischen den saugfähigen Scheiben 34, 40 und ermöglichen so eine allseitige Schmierung des Wälzlagers 28.

Das Wälzlager 28 und die Verteilungselemente 42 sind in einer Lagerfassung 44 angeordnet. Im vorliegenden Beispiel ist die Lagerfassung 44 in einem einen vorvakuumseitigen Teil des Gehäuses 18 der Vakuumpumpe bildenden Grundkörper 46 angeordnet. Um zu verhindern, dass die Verteilungselemente 42 herausfallen, wenn das Deckelelement 38 und die Scheiben 34 zu Wartungszwecken entfernt werden, ist ein Sicherungselement 48 in der Form eines O-Rings in einer Nut in einer innen liegenden Wand 50 des wannenförmigen Einsatzes 36 angeordnet. Der O-Ring 48 drückt die Verteilungselemente 42 in deren in Fig. 1 unteren Bereich radial nach innen (Richtung R) und sichert diese mittels eines Reibschlusses in Ihrer Einbaulage.

Es ist auch möglich, an jedem Verteilungselement 42 einen eigenen O-Ring 48 vorzusehen. Der O-Ring 48 würde auch dann das Verteilungselement 42 von der innenliegenden Wand 50 des Grundkörpers 46 radial nach innen drücken. Somit wären die einzelnen Verteilungselemente 42 jeweils unabhängig voneinander in ihrer Einbaulage fixiert, um ihr Herausfallen zu verhindern.

Um das Wälzlager 28 in seiner Lage zu sichern, sind radiale und axiale Dämpfungselemente 52 in einem Aufnahmeraum 56 für das Wälzlager 28 vorgesehen. Das Wälzlager 28 wird in diesem Aufnahmeraum 56 mittels eines per Gewinde einstellbaren Axialanschlags 54 derart vorgespannt, dass es eine bedarfsgerechte, geringfügige axiale Bewegungsfreiheit in der axialen Richtung A besitzt.

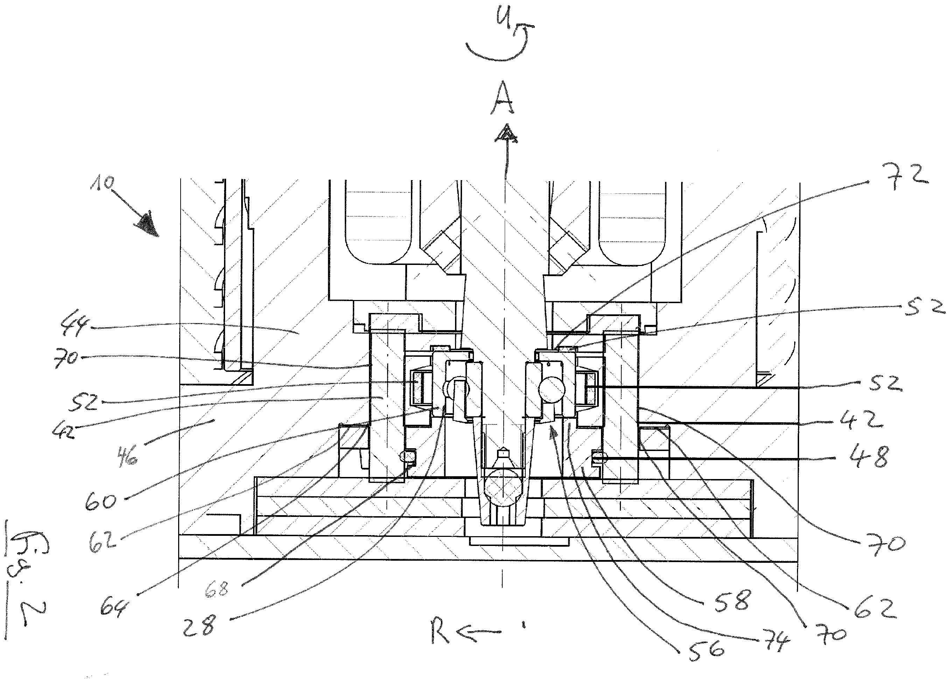

Die Fig. 2 zeigt einen Querschnitt durch das vorvakuumseitige Ende einer weiteren Vakuumpumpe 10. Die Vakuumpumpe 10 umfasst ebenfalls einen einen vorvakuumseitigen Teil eines Gehäuses der Pumpe bildenden Grundkörper 46, sowie einen integral in dem Grundkörper 46 ausgebildeten Aufnahmeraum 56, für das Wälzlager 28. In dem Aufnahmeraum 56 sind axiale und radiale Dämpfungselemente 52 vorgesehen, um das Wälzlager 28 in dem Aufnahmeraum vorzuspannen. Um die Lage des Wälzlagers 28 in axialer Richtung A nach unten zu begrenzen, ist ein separates Abschlusselement 58 vorgesehen, welches direkt an einem Außenring 60 des Wälzlagers 28 anliegt und damit das Lager 28 in dem Aufnahmeraum 56 hält.

Zwischen dem Grundkörper 46 und dem Abschlusselement 58 ist ferner ein Abstandselement 62, insbesondere eine Ring- oder Passscheibe, vorgesehen. Beim Zusammenbau einer Vakuumpumpe 10 muss das Wälzlager 28 in einer definierten axialen Position in dem Aufnahmeraum 56 eingespannt werden, um einen sicheren Betrieb der Pumpe 10 zu gewährleisten. Da die einzelnen Bauteile der Vakuumpumpe 10 gewissen Fertigungstoleranzen unterliegen, wird bei ihrem Zusammenbau ein für diese Vakuumpumpe 10 spezifisches Abstandselement 62 ausgewählt, um die gewünschte definierte axiale Position des Lagers 28 zu erhalten.

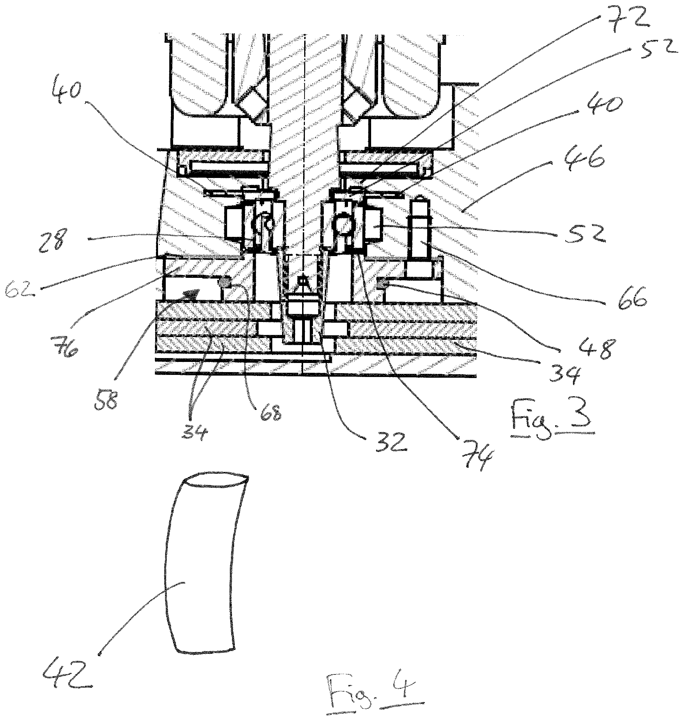

Das Abstandselement 62 stützt sich an einer an dem Grundkörper 46 angeordneten Abstützfläche 64, insbesondere einer Stirnfläche, ab und ist unmittelbar zwischen dem Abschlusselement 58 und der Abstützfläche 64 angeordnet. Das Abschlusselement 58 ist mittels sich in axialer Richtung erstreckenden Schrauben 66 (siehe Fig. 3) an dem Grundkörper 46 fixiert. Letztlich wird das Wälzlager 28 somit durch das Abschlusselement 58 in dem Grundkörper 46 gesichert. Mit Hilfe einer aus einem Satz verschieden dimensionierter Passscheiben, d.h. Passscheiben mit unterschiedlicher Dicke, gewählten Passscheibe 62 wird die optimale axiale Lage des Wälzlagers 28 eingestellt.

Zur Schmierung des Wälzlagers 28 sind mehrere Verteilungselemente 42, in Figur 2 sind zwei erkennbar, in Öffnungen 70 bzw. Vertiefungen der Lagerfassung 44 vorgesehen. Um die Verteilungselemente 42 in ihrer Einbaulage mit Kraft zu beaufschlagen bzw. vorzuspannen und mittels Reibschluss zu fixieren, ist am unteren Ende des Abschlusselements 58 ein Sicherungselement 48 in der Form eines O-Rings vorgesehen. Im Gegensatz zu dem in Fig. 1 gezeigten O-Ring 48 drückt der O-Ring 48 der Fig. 2 die Verteilungselemente 42 in radialer Richtung R nach außen. Der O-Ring 48 ist auf der dem Wälzlager 28 gegenüberliegenden Seite des Abschlusselements 58 in einer dafür vorgesehenen Nut 68 angeordnet.

In dem Abschlusselement 58 und in der Lagerfassung 44 sind jeweils Öffnungen 70 vorgesehen, die vorzugsweise so miteinander fluchten, so dass die Verteilungselemente 42 mit Vorspannung in der Lagerfassung 44 angeordnet werden können, um das Wälzlager 28 mit Schmiermittel zu versorgen, und so dass das oder die Fixierungsmittel - z.B. Schrauben 66 - zur Fixierung des Abschlusselements 58 an der Lagerfassung 44 platziert werden können.

Das Abschlusselement 58 erfüllt somit mehrere Funktionen. Zum einen wird mittels des O-Rings 48 eine Einrichtung zur Lagefixierung der Verteilungselemente 42 an der dem Wälzlager 28 gegenüberliegenden Seite des Abschlusselements 58 bereitgestellt. Zum anderen dient es zum Einspannen und axialen Festlegen des Wälzlagers 28 in dem Aufnahmeraum 56. Hierbei liegt das Abschlusselement 62 an einem Außenring des Wälzlagers an.

Die Fig. 3 zeigt einen weiteren Querschnitt durch die Vakuumpumpe 10 gemäß Fig. 2. In diesem Querschnitt sind keine Verteilungselemente 42 zu sehen, sondern eine von mehreren Schrauben 66 mittels derer das Abschlusselement 58 an dem Grundkörper 46 verankert ist, um das Wälzlager 28 in seiner axialen Lage zu halten bzw. den Aufnahmeraum 56 in einer axialen Richtung A zu begrenzen.

In der Zeichnung gemäß Fig. 3 ist eine in den Aufnahmeraum 56 ragende Schulter 72 zu sehen, die am Grundkörper 46 ausgebildet ist. Das Wälzlager 28 ist zwischen der Schulter 72 und einem Ansatz 74 des Abschlusselements 58 angeordnet, wobei sich der Ansatz 74 in axialer Richtung durch das Abstandselement 62 hindurch erstreckt. Das Abstandselement 62 liegt wiederum an einem Ringflansch 76 des Abschlusselements 58 an. An der dem Ansatz 74 abgewandten Seite des Flansches 76 ist der Abschnitt des Abschlusselements 58 angeordnet, der die Nut 68 für den O-Ring 48 trägt.

Beim Zusammenbau der Vakuumpumpe 10 wird ein für die Vakuumpumpe 10 spezifisches Abstandselement 62 ausgewählt, so dass das Wälzlager 28 in einer definierten axialen Lage und mit der gewünschtenToleranz in der Lagerfassung 44 eingebaut werden kann. Das Wälzlager 28 der Fig. 1 ist mittels des Axialanschlags 54 über ein Gewinde in seiner axialen Lage gehalten. Durch Bewegungen bei einem Betrieb der Vakuumpumpe 10 kann sich u. U. der Axialanschlag 54 leicht drehen, wodurch auch die axiale Lage des Lagers 28 beeinflusst werden könnte. Dies wird bei der Vakuumpumpe 10 gemäß Fig. 2 und 3 dadurch vermieden, dass das Abschlusselement 58 mittels Schrauben 66 an der integral im Grundkörper 46 ausgeformten Lagerfassung 44 gesichert wird, so dass das Wälzlager 28 zuverlässig zwischen der Schulter 72 und dem Abschlusselement 58 fixiert ist. D.h. die mittels des Abstandselements 62 eingestellte axiale Lage des Wälzlagers 28 kann sich nicht verändern.

Zusätzlich zu dem oberen axialen Dämpfungselement 52, welches zwischen der Schulter 72 und dem Wälzlager 28 angeordnet ist, können - alternativ oder zusätzlich - axiale Dämpfungselemente auf der gegenüberliegenden Seite des Wälzlagers 28 angeordnet sein (nicht gezeigt), zum Beispiel zwischen dem Wälzlager 28 und dem Abschlusselement 58.

Die Figur 4 zeigt eine Seitenansicht eines gekrümmten Verteilungselements 42, das Beispiel (vollständig oder zumindest teilweise) aus Poroplast besteht. Die Krümmung kann z.B. durch Biegen eines strangförmigen Ausgangsmaterials erzeugt werden. Das Biegen kann während dem Zuschneiden des Verteilungselements 42 erfolgen. Beim Einführen des gekrümmten Verteilungselements 42 in die Öffnung 70 in der Lagerfassung 44 bzw. in dem Grundkörper 46 wird dieses so verspannt, dass ein Herausfallen des Verteilungselements 42 verhindert wird.

Als Alternative zu einem gekrümmten Verteilungselement 42 könnte auch ein elastisches Verteilungselement 42 vorgesehen sein (nicht gezeigt), das für den Einbau zusammengedrückt wird und das sich bei Entlastung federartig in den Öffnungen 70 bzw. Vertiefungen der Lagerfassung 44 verspannt, so dass es in seiner Einbaulage fixiert wird. Solche elastischen Verteilungselemente 42 können auch mit einem Sicherungselement 48 gemäß Fig. 2 oder 3 kooperieren.

Es wäre auch denkbar, dass die Verteilungselemente 42 - alternativ oder zusätzlich - in ihrer Umfangsrichtung U verspannt werden. Beispielsweise werden sie durch leicht relativ zueinander verdrehte Öffnungen 70 der Lagerfassung 44 bzw. des Abschlusselements in Umfangsrichtung U eingeklemmt.

### Bezugszeichenliste

- 10: Vakuumpumpe
- 12: Einlassflansch
- 14: Pumpeneinlass
- 16: Bauraum
- 18: Gehäuse
- 20: Rotorwelle
- 22: Rotorscheibe
- 24: Statorscheibe
- 26: Abstandsring
- 28: Wälzlager
- 30: Permanentmagnetlager
- 32: Spritzmutter
- 34, 40: saugfähige Scheiben
- 36: wannenförmiger Einsatz
- 38: Deckelelement
- 42: Verteilungselement
- 44: Lagerfassung
- 46: Grundkörper
- 48: Sicherungselement
- 50: innenliegende Wand
- 52: Dämpfungselement
- 54: Axialanschlag
- 56: Aufnahmeraum
- 58: Abschlusselement
- 60: Außenring
- 62: Abstandselement
- 64: Abstützfläche
- 66: Schraube
- 68: Nut
- 70: Öffnung
- 72: Schulter
- 74: Ansatz
- 76: Ringflansch

- A: axiale Richtung
- R: radiale Richtung
- U: Umfangsrichtung

## Patentansprüche

1. Lagerfassung für eine Vakuumpumpe (10), insbesondere eine Turbomolekularpumpe, die ein mit Schmiermittel versorgtes Wälzlager (28) zur Lagerung einer Welle (20), einen Aufnahmeraum (56) für das Wälzlager (28), ein - insbesondere separates - Abschlusselement (58), mittels dem die axiale Lage des Wälzlagers (28) in dem Aufnahmeraum (56) in axialer Richtung (A) begrenzt ist, und zumindest ein ein Schmiermittel förderndes oder leitendes Verteilungselement (42), mit dem das Schmiermittel in dem Aufnahmeraum (56) verteilbar ist, umfasst, wobei das Verteilungselement (42) in seiner Einbaulage mit Kraft beaufschlagt und/oder vorgespannt ist und mittels Reibschluss in seiner Einbaulage fixiert ist,
wobei zumindest eine Einrichtung (48) zur Lagefixierung des Verteilungselements (42) in seiner Einbaulage vorgesehen ist, um das Verteilungselement (42) in seiner Einbaulage in der Lagerfassung (44) zur Lagefixierung zu verspannen,
wobei die zumindest eine Einrichtung (48) ein elastisches Sicherungslement, insbesondere einen O-Ring, aufweist, das beim Einsetzen des zumindest einen Verteilungselements (42) vorgespannt ist und das zumindest eine Verteilungselement (42) in seiner Einbaulage hält
**dadurch gekennzeichnet, dass**
in dem Abschlusselement (58) und der Lagerfassung (44) jeweils Öffnungen (70) vorgesehen sind, die miteinander fluchten, um durch diese das Wälzlager (28) mit dem Schmiermittel zu versorgen und/oder Fixierungsmittel zur Fixierung des Abschlusselements (58) an der Lagerfassung (44) zu führen.

2. Lagerfassung für eine Vakuumpumpe (10), insbesondere eine Turbomolekularpumpe, die ein mit Schmiermittel versorgtes Wälzlager (28) zur Lagerung einer Welle (20), einen Aufnahmeraum (56) für das Wälzlager (28), ein - insbesondere separates - Abschlusselement (58), mittels dem die axiale Lage des Wälzlagers (28) in dem Aufnahmeraum (56) in axialer Richtung (A) begrenzt ist, und mehrere Schmiermittel fördernde oder leitende Verteilungselemente (42), mit denen das Schmiermittel in dem Aufnahmeraum (56) verteilbar ist, umfasst, wobei die Verteilungselemente (42) in ihrer Einbaulage mit Kraft beaufschlagt und/oder vorgespannt sind und mittels Reibschluss in ihrer Einbaulage fixiert sind,
wobei zumindest eine Einrichtung (48) zur Lagefixierung der Verteilungselemente (42) in ihrer Einbaulage vorgesehen ist, um die Verteilungselemente (42) in ihrer Einbaulage in der Lagerfassung (44) zur Lagefixierung zu verspannen,
**dadurch gekennzeichnet, dass**
die Einrichtung (48) an jedem Verteilungselement einen O-Ring umfasst, der beim Einsetzen des jeweiligen Verteilungselements (42) für die Vorspannung sorgt, um das Verteilungselement (42) sicher dort zu halten.

3. Lagerfassung nach Anspruch 1 oder 2,
**dadurch gekennzeichnet, dass**
die Kraft in radialer Richtung (R), insbesondere nach radial außen, und/oder in Bezug auf die Welle (20) in Umfangsrichtung (U) wirkt.

4. Lagerfassung nach zumindest einem der vorstehenden Ansprüche,
**dadurch gekennzeichnet, dass**
die zumindest eine Einrichtung (48) am oder im Abschlusselement (58) vorgesehen ist und/oder an dem zumindest einem Verteilungselement (42) angeordnet ist.

5. Lagerfassung nach zumindest einem der vorstehenden Ansprüche,
**dadurch gekennzeichnet, dass**
die Einrichtung (48) auf der dem Wälzlager (28) gegenüberliegenden Seite des Abschlusselements (58) angeordnet ist.

6. Lagerfassung nach zumindest einem der vorstehenden Ansprüche,
**dadurch gekennzeichnet, dass**
wobei das Abschlusselement (58) mittels Schrauben an der Lagerfassung (44) fixiert ist, vorzugsweise wobei die Schrauben (66) das Abschlusselement (58) in axialer Richtung mit der Lagerfassung (44) verbinden.

7. Lagerfassung nach den Ansprüchen 1 und 6,
**dadurch gekennzeichnet, dass**
das zumindest eine Verteilungselement (42) durch die Öffnungen (70) in dem Abschlusselement (58) und der Lagerfassung (44) hindurch geführt ist, insbesondere wobei die Öffnungen (70) in dem als Druckring ausgebildete Abschlusselement (58) leicht gegenüber den Öffnungen in der Lagerfassung (44) verdreht sind.

8. Lagerfassung nach zumindest einem der vorstehenden Ansprüche 1 bis 7,
**dadurch gekennzeichnet, dass**
das Abschlusselement (58) zur Lagefixierung des Verteilungselements (42) und zum Einspannen des Wälzlagers (28) in dem Aufnahmeraum (56) angeordnet ist, insbesondere wobei das Abschlusselement (58) an einem Außenring (60) des Wälzlagers (28) anliegt.

9. Lagerfassung nach zumindest einem der vorstehenden Ansprüche,
**dadurch gekennzeichnet, dass**
an zumindest einem, insbesondere an beiden axialen Enden des Verteilungselements (42) zumindest eine Schmiermittel leitende Zufuhrkomponente (34, 40), insbesondere aus einem Filzmaterial, vorgesehen ist, wobei an mindestens einem axialen Ende die Zufuhrkomponente (34, 40) das Verteilungselement (42) und das Wälzlager (28) derart miteinander verbindet, dass eine Fluidverbindung zwischen dem Verteilungselement (42) und dem Wälzlager (28) entsteht.

10. Lagerfassung nach zumindest einem der vorstehenden Ansprüche,
**dadurch gekennzeichnet, dass**
das Verteilungselement (42) eine gekrümmte Form aufweist.

11. Lagerfassung nach zumindest einem der vorstehenden Ansprüche,
**dadurch gekennzeichnet, dass**
das Verteilungselement (42) elastisch ausgebildet ist.

12. Vakuumpumpe mit einer Lagerfassung (44) nach zumindest einem der Ansprüche 1 bis 11.

13. Vakuumpumpe nach Anspruch 12,
**dadurch gekennzeichnet, dass**
die Lagerfassung (44) integral in einem vorvakuumseitigen Teil eines Gehäuses (18) der Vakuumpumpe (10) bildenden Grundkörper (46) vorgesehen ist oder dass die Lagerfassung (44) als separater Einsatz dazu ausgebildet ist, in einem einen vorvakuumseitigen Teil eines Gehäuses (18) der Vakuumpumpe (10) bildenden Grundkörper (46) angeordnet zu werden.

## Claims

1. A bearing mount for a vacuum pump (10), in particular for a turbomolecular pump, which comprises a rolling element bearing (28), supplied with lubricant, for supporting a shaft (20); a reception space (56) for the rolling element bearing (28); an end element (58) - in particular a separate end element (58) - by means of which an axial position of the rolling element bearing (28) in the reception space (56) is bounded in an axial direction (A); and at least one distribution element (42) which conveys or conducts lubricant and by which the lubricant can be distributed in the reception space (56), wherein the distribution element (42) is acted on by force and/or is preloaded in its installation position and is fixed in its installation position by means of friction locking;
wherein at least one device (48) is provided for the positional fixing of the distribution element (42) in its installation position to clamp the distribution element (42) in its installation position in the bearing mount (44) for the positional fixing; and
wherein the at least one device (48) has an elastic securing element, in particular an O-ring, which is preloaded on an insertion of the at least one distribution element (42) and which holds the at least one distribution element (42) in its installation position,
**characterized in that**
openings (70) are respectively provided in the end element (58) and in the bearing mount (44) and are aligned with one another to supply the rolling element bearing (28) with the lubricant through them and/or to guide fixing means for fixing the end element (58) to the bearing mount (44).

2. A bearing mount for a vacuum pump (10), in particular for a turbomolecular pump, which comprises a rolling element bearing (28), supplied with lubricant, for supporting a shaft (20); a reception space (56) for the rolling element bearing (28); an end element (58) - in particular a separate end element (58) - by means of which the axial position of the rolling element bearing (28) in the reception space (56) is bounded in the axial direction (A); and a plurality of distribution elements (42) which convey or conduct lubricant and by which the lubricant can be distributed in the reception space (56), wherein the distribution elements (42) are acted on by force and/or are preloaded in their installation positions and are fixed in their installation positions by means of friction locking; and
wherein at least one device (48) is provided for the positional fixing of the distribution elements (42) in their installation positions to clamp the distribution elements (42) in their installation positions in the bearing mount (44) for the positional fixing,
**characterized in that**
the device (48) comprises an O-ring at each distribution element, with the O-ring providing the preload on the insertion of the respective distribution element (42) to securely hold the distribution element (42) there.

3. A bearing mount in accordance with claim 1 or claim 2,
**characterized in that**
the force acts in a radial direction (R), in particular radially outwardly, and/or acts in a peripheral direction (U) with respect to the shaft (20).

4. A bearing mount in accordance with at least one of the preceding claims,
**characterized in that**
the at least one device (48) is provided at or in the end element (58) and/or is arranged at the at least one distribution element (42).

5. A bearing mount in accordance with at least one of the preceding claims,
**characterized in that**
the device (48) is arranged at the side of the end element (58) disposed opposite the rolling element bearing (28).

6. A bearing mount in accordance with at least one of the preceding claims,
**characterized in that**
the end element (58) is fixed to the bearing mount (44) by means of screws, with the screws (66) preferably connecting the end element (58) to the bearing mount (44) in the axial direction.

7. A bearing mount in accordance with claims 1 and 6,
**characterized in that**
the at least one distribution element (42) is led through the openings (70) in the end element (58) and in the bearing mount (44), with the openings (70) in the end element (58) configured as a pressure ring in particular being slightly rotated with respect to the openings in the bearing mount (44).

8. A bearing mount in accordance with at least one of the preceding claims 1 to 7,
**characterized in that**
the end element (58) is arranged in the reception space (56) for the positional fixing of the distribution element (42) and for the clamping of the rolling element bearing (28), with the end element (58) in particular contacting an outer ring (60) of the rolling element bearing (28).

9. A bearing mount in accordance with at least one of the preceding claims,
**characterized in that**
at least one feed component (34, 40), in particular composed of a felt material, which conducts lubricant is provided at at least one axial end, in particular at both axial ends of the distribution element (42), with the feed component (34, 40) connecting the distribution element (42) and the rolling element bearing (28) to one another at at least one axial end such that a fluid connection is produced between the distribution element (42) and the rolling element bearing (28).

10. A bearing mount in accordance with at least one of the preceding claims,
**characterized in that**
the distribution element (42) has a curved shape.

11. A bearing mount in accordance with at least one of the preceding claims,
**characterized in that**
the distribution element (42) is elastic.

12. A vacuum pump comprising a bearing mount (44) in accordance with at least one of the claims 1 to 11.

13. A vacuum pump in accordance with claim 12,
**characterized in that**
the bearing mount (44) is integrally provided in a base body (46) which forms a part of a housing (18) of the vacuum pump (10) at a pre-vacuum side; or **in that** the bearing mount (44) as a separate insert is configured to be arranged in a base body (46) which forms a part of a housing (18) of the vacuum pump (10) at a pre-vacuum side.

## Revendications

1. Socle de palier pour une pompe à vide (10), en particulier pour une pompe turbomoléculaire, comprenant un palier à roulement (28) alimenté en lubrifiant et destiné à supporter un arbre (20), un espace de réception (56) pour le palier à roulement (28), un élément de terminaison (58) en particulier séparé, au moyen duquel la position axiale du palier à roulement (28) dans l'espace de réception (56) est limitée dans la direction axiale (A), et au moins un élément de répartition (42) qui transporte ou achemine un lubrifiant et qui permet de répartir le lubrifiant dans l'espace de réception (56), l'élément de répartition (42) étant sollicité et/ou précontraint par une force dans sa position de montage et étant fixé dans sa position de montage par coopération de friction,
dans lequel
il est prévu au moins un dispositif (48) de fixation de la position de l'élément de répartition (42) dans sa position de montage, afin de serrer l'élément de répartition (42) dans sa position de montage dans le socle de palier (44) pour fixer la position,
ledit au moins un dispositif (48) présente un élément de blocage élastique, en particulier un joint torique, qui est précontraint lors de l'insertion dudit au moins un élément de répartition (42) et qui maintient ledit au moins un élément de répartition (42) dans sa position de montage,
**caractérisé en ce que**
des ouvertures respectives (70) sont prévues dans l'élément de terminaison (58) et dans le socle de palier (44), qui sont en alignement les unes avec les autres afin d'alimenter le palier à roulement (28) en lubrifiant à travers lesdites ouvertures et/ou de guider des moyens de fixation de l'élément de terminaison (58) sur le socle de palier (44).

2. Socle de palier pour une pompe à vide (10), en particulier pour une pompe turbomoléculaire, comprenant un palier à roulement (28) alimenté en lubrifiant et destiné à supporter un arbre (20), un espace de réception (56) pour le palier à roulement (28), un élément de terminaison (58) en particulier séparé, au moyen duquel la position axiale du palier à roulement (28) dans l'espace de réception (56) est limitée dans la direction axiale (A), et plusieurs éléments de répartition (42) qui transportent ou acheminent un lubrifiant et qui permettent de répartir le lubrifiant dans l'espace de réception (56), les éléments de répartition (42) étant sollicités et/ou précontraints par une force dans leur position de montage et étant fixés dans leur position de montage par coopération de friction,
dans lequel
il est prévu au moins un dispositif (48) de fixation de la position des éléments de répartition (42) dans leur position de montage, afin de serrer les éléments de répartition (42) dans leur position de montage dans le socle de palier (44) pour fixer la position,
**caractérisé en ce que**
le dispositif (48) comprend sur chaque élément de répartition un joint torique qui assure la précontrainte lors de l'insertion de l'élément de répartition respectif (42), afin de maintenir en place ledit élément de répartition (42) de façon sûre.

3. Socle de palier selon la revendication 1 ou 2,
**caractérisé en ce que**
la force dans la direction radiale (R), en particulier radialement vers l'extérieur, et/ou par rapport à l'arbre (20), agit en direction périphérique (U).

4. Socle de palier selon l'une au moins des revendications précédentes,
**caractérisé en ce que**
ledit au moins un dispositif (48) est prévu sur ou dans l'élément de terminaison (58) et/ou est agencé sur ledit au moins un élément de répartition (42).

5. Socle de palier selon l'une au moins des revendications précédentes,
**caractérisé en ce que**
le dispositif (48) est agencé sur le côté de l'élément de terminaison (58) opposé au palier à roulement (28).

6. Socle de palier selon l'une au moins des revendications précédentes,
**caractérisé en ce que**
l'élément de terminaison (58) est fixé sur le socle de palier (44) à l'aide de vis, de préférence les vis (66) reliant l'élément de terminaison (58) en direction axiale au socle de palier (44).

7. Socle de palier selon les revendications 1 et 6,
**caractérisé en ce que**
ledit au moins un élément de répartition (42) est mené à travers les ouvertures (70) dans l'élément de terminaison (58) et dans le socle de palier (44), en particulier les ouvertures (70) dans l'élément de terminaison (58), réalisé sous forme de bague de pression, étant légèrement tournées par rapport aux ouvertures dans le socle de palier (44).

8. Socle de palier selon l'une au moins des revendications précédentes 1 à 7,
**caractérisé en ce que**
l'élément de terminaison (58) est agencé pour fixer la position de l'élément de répartition (42) et pour serrer le palier à roulement (28) dans l'espace de réception (56), en particulier l'élément de terminaison (58) prenant appui contre une bague extérieure (60) du palier à roulement (28).

9. Socle de palier selon l'une au moins des revendications précédentes,
**caractérisé en ce que**
au moins un composant d'alimentation (34, 40), constitué en particulier en matériau de feutre, acheminant un lubrifiant, est prévu à au moins une, en particulier aux deux extrémités axiales de l'élément de répartition (42), et
à au moins une extrémité axiale, le composant d'alimentation (34, 40) relie l'élément de répartition (42) et le palier à roulement (28) l'un à l'autre de telle sorte qu'une communication fluidique s'établit entre l'élément de répartition (42) et le palier à roulement (28).

10. Socle de palier selon l'une au moins des revendications précédentes,
**caractérisé en ce que**
l'élément de répartition (42) présente une forme coudée.

11. Socle de palier selon l'une au moins des revendications précédentes,
**caractérisé en ce que**
l'élément de répartition (42) est réalisé de façon élastique.

12. Pompe à vide comportant un socle de palier (44) selon l'une au moins des revendications 1 à 11.

13. Pompe à vide selon la revendication 12,
**caractérisée en ce que**
le socle de palier (44) est prévu intégralement dans un corps de base (46) qui constitue une partie côté pré-vide d'un boîtier (18) de la pompe à vide (10), ou **en ce que**
le socle de palier (44) en tant qu'insert séparé est réalisé pour être disposé dans un corps de base (46) qui constitue une partie côté pré-vide d'un boîtier (18) de la pompe à vide (10).
